# EUROPÄISCHE PATENTSCHRIFT

(11) **EP 2 639 107 B1**
(45) Veröffentlichungstag und Bekanntmachung des Hinweises auf die Patenterteilung: **23.01.2019**
(21) Anmeldenummer: 13000916.0
(22) Anmeldetag: 23.02.2013
(51) Int. Cl.: B60Q 3/64, B60Q 3/78

(54) **Beleuchtungseinrichtung, insbesondere Konturbeleuchtung für ein Kraftfahrzeug**
Lighting device, in particular contour illumination for a motor vehicle
Dispositif d'éclairage, notamment éclairage de contour pour un véhicule automobile

(30) Priorität: 16.03.2012 DE 102012005399
(43) Veröffentlichungstag der Anmeldung: 18.09.2013
(73) Patentinhaber: AUDI AG, 85045 Ingolstadt (DE)
(72) Erfinder: Pfeil, Marcus, 90537 Feucht (DE); Maurer, Jürgen, 85053 Ingolstadt (DE); Mohos, Richard, 85049 Ingolstadt (DE); Tovar, Johannes, 85049 Ingolstadt (DE)
(74) Vertreter: Thielmann, Frank

(56) Entgegenhaltungen:
- DE-A1- 10 135 478
- DE-A1- 10 236 499
- DE-A1-102010 006 915
- DE-A1-102010 030 660
- DE-C1- 4 131 340
- FR-A1- 2 920 717
- US-A- 5 709 453
- US-A1- 2005 213 342

## Beschreibung

Die Erfindung betrifft eine Beleuchtungseinrichtung, insbesondere Konturbeleuchtung für ein Kraftfahrzeug.

Beleuchtungseinrichtungen sind in unterschiedlichster Art und Form bekannt. Sie dienen einerseits zur Raumbeleuchtung, andererseits aber mitunter auch zur Kenntlichmachung oder Hervorhebung bestimmter Gegenstände oder Objekte. Derartige Beleuchtungen werden häufig Konturbeleuchtungen genannt, da sie optisch die Form oder Kontur eines hervorzuhebenden Gegenstandes betonen. Solche Konturbeleuchtungen kommen sowohl bei Geräten oder Maschinen, aber beispielsweise auch in einem Kraftfahrzeug zum Einsatz. Insbesondere dort finden sie beispielsweise Anwendung bei Lautsprechern, Tastern und Bedienfelder, Cupholdern etc. Diese Beleuchtungseinrichtungen sind letztlich Leuchtstreifen, die bestimmte Konturen hervorheben bzw. betonen sollen. Üblicherweise sind solche Konturbeleuchtungen, also Linienbeleuchtungen, mittels eines Lichtleiters realisiert, der entlang der hervorzuhebenden Kontur verläuft. Dieser Lichtleiter ist entweder direkt einsehbar, oder hinter einer davor angeordneten Streuscheibe verbaut. In den Lichtleiter wird Licht an einer Stirnseite eingekoppelt, das Licht tritt seitlich längs des Lichtleiters aus, so dass letztlich ein linienförmiger Lichtstreifen sichtbar ist.

In Druckschrift DE 10 2010 030 660 A1 wird ein beleuchtetes Innenausstattungsteil für ein Fahrzeug beschrieben. Das Innenausstattungsteil umfasst einen zweiteiligen Grundkörper mit einer Nut, in der ein Lichtleiter aufgenommen ist. Der Lichtleiter koppelt Licht in eine Oberfläche eines Lichtleiterelements ein, wobei das Licht an einer Stirnseite des Lichtleiterelements wieder ausgekoppelt wird.

Um die Eigenschaften eines solchen Licht leitenden Elements wie beispielsweise eines Lichtleiters nicht negativ zu beeinflussen benötigt ein solches Element eine Mindestquerschnittsfläche von ca. 7 mm², wobei eine Höhe/Breite bzw. ein Durchmesser von 2,5 mm nicht unterschritten werden darf. Bei Streuscheiben sind die begrenzenden Parameter die Herstell- und Integrierbarkeit in den Bauraum. Heutige bekannte Konturbeleuchtungen weisen aus diesem Grund eine beachtliche Breite auf, d. h., dass der helle Lichtstreifen relativ breit ist, also üblicherweise ca. 2,5 mm oder mehr. Ein derart breiter Lichtstreifen ist jedoch in manchen Fällen nicht wünschenswert, sei es aus optischen Gründen, da beispielsweise das hervorzuhebende Bauteil relativ klein ist und ein derart breiter Lichtstreifen quasi überdimensioniert wäre, sei es aus baulichen Gründen, da sich mitunter ein derart breiter Lichtstreifen nicht immer integrieren lässt.

Der Erfindung liegt damit das Problem zugrunde, eine Beleuchtungseinrichtung, insbesondere in Form einer Konturbeleuchtung für ein Kraftfahrzeug, anzugeben, die es ermöglicht, einen sehr schmalen Lichtstreifen auszubilden.

Zur Lösung dieses Problems ist erfindungsgemäß eine Beleuchtungseinrichtung gemäß Anspruch 1 vorgesehen.

Die erfindungsgemäße Beleuchtungseinrichtung weist ein zweiteiliges Gehäuse auf, das, da eine Linienbeleuchtung erzeugt werden soll, länglich ist und letztlich eine Form hat, die der abzubildenden Kontur respektive der Kontur, die von der erzeugten Lichtlinie umrahmt werden soll, entspricht. Das Gehäuse weist zum einen einen Aufnahmeraum auf, in dem ein Lichtleiter angeordnet wird, in welchen an einem Ende Licht eingekoppelt wird, das in an sich bekannter Weise seitlich emittiert wird. Dem Lichtleiter parallelgeordnet ist eine Kunststofffolie, die zwischen den Rändern der Gehäuseteile aufgenommen ist und dort randbündig abschließt. Die Kunststofffolie ist für das vom Lichtleiter emittierte Licht transparent. Da die Kunststofffolie parallel zum Lichtleiter verläuft, wird folglich vom Lichtleiter emittiertes Licht in die eine schmale Stirnseite des Kunststofffolienstreifens eingekoppelt. Das Licht tritt an der anderen schmalen Stirnseite des Folienstreifens wieder aus. Diese Stirnseite ist wie beschrieben randbündig zwischen den sehr schmalen Gehäuserändern aufgenommen. Diese schmale Stirnseite bildet folglich die einzige Lichtaustrittsfläche, die den Lichtstreifen definiert. Die Dicke der Kunststofffolie kann deutlich geringer gewählt werden als der Lichtleiterdurchmesser, so dass sich folglich ein wesentlich schmalerer Lichtstreifen erzeugen lässt. Mithin kann folglich eine sehr feine Konturbeleuchtung realisiert werden, die einerseits auch kleinere Strukturen optisch ansprechend hervorhebt, andererseits aber auch ohne Weiteres integriert werden kann, auch wenn wenig Bauraum zur Verfügung steht.

Die Dicke des Folienstreifens sollte bevorzugt kleiner 1 mm, insbesondere zwischen 0,3 - 0,5 mm liegen. Es ist durch Verwendung einer entsprechend dünnen Folie folglich möglich, Lichtstreifen zu erzeugen, die eine sehr geringe Breite von deutlich unter 1 mm besitzen, verglichen mit bisher bekannten Konturbeleuchtungen, bei denen die Lichtstreifenbreite 2 mm oder mehr beträgt.

Als Kunststofffolie wird bevorzugt eine PMMA-Folie verwendet, die hinreichend transparent ist.

Um die Möglichkeit zu geben, im Bedarfsfall auch ein farbiges Konturlicht zu emittieren, sieht eine zweckmäßige Weiterbildung der Erfindung vor, einen eingefärbten Kunststofffolienstreifen zu verwenden. Hiermit ist es ohne Weiteres möglich, beispielsweise eine rote, gelbe oder grüne Konturbeleuchtungslinie zu erzeugen, wenngleich weißes Licht als Ausgangslicht in den Lichtleiter eingekoppelt wird.

Für eine sichere Fixierung und Integration des Kunststofffolienstreifens im Gehäuse respektive zwischen den Gehäuseteilen weisen die beiden Gehäuseteile bevorzugt randseitige Auflageflächen auf, zwischen denen der Kunststofffolienstreifen aufgenommen ist. Diese Auflageflächen bieten folglich einen hinreichend großen Bereich für eine sichere und feste Folienfixierung. Sie schließen sich bevorzugt direkt an den Aufnahmeraum an, in dem der Lichtleiter aufgenommen ist, so dass die Möglichkeit besteht, die Kunststofffolie bis unmittelbar an respektive in Anlage an den Lichtleiter zu führen.

Zur Fixierung des Kunststofffolienstreifens zwischen den Rändern, insbesondere zwischen den Auflageflächen ist es denkbar, die Folie einzuklemmen, wenn die Gehäuseteile über geeignete Verbindungsmittel wie Rast- oder Klemmmechanismen etc. hinreichend fest miteinander verklemmt werden können. Denkbar ist es aber auch, die Folie zwischen den Rändern zu verkleben.

Zur einfachen Ausbildung des Aufnahmeraums sieht eine zweckmäßige Weiterbildung der Erfindung vor, dass der Aufnahmeraum querschnittlich rund ist, wobei eine halbrunde Eintiefung im ersten und eine halbrunde Eintiefung im zweiten Gehäuseteil vorgesehen ist, die sich in der Montagestellung zum Aufnahmeraum ergänzen.

Der Aufnahmeraum selbst kann zur Bildung einer Spiegelfläche abschnittsweise lackiert oder, insbesondere mit Aluminium, bedampft sein.

Um den Randbereich des Gehäuses, in dem die Lichtaustrittsstirnseite des Streifens mündet, möglichst schmal zu gestalten, so dass das Gehäuse insgesamt in diesem Bereich möglichst kleinformatig ist, ist es erfindungsgemäß vorgesehen, dass beide Gehäuseteile randseitig gekröpft ausgebildet sind. Dies ermöglicht es, die Gehäuseteile im Randbereich äußerst schmal auszuführen, so dass sich dort eine Gesamtgehäusestärke einstellt, die im Bereich weniger Millimeter liegt, so dass das Gehäuse selbst bei Integration an dem konturmäßig hervorzuhebenden Gegenstand nicht auffällt. Dabei sollte die Länge des beidseits gekröpften Gehäuses wenigstens dem Dreifachen, insbesondere dem Vierfachen der Breite dieses Bereichs entsprechen, so dass sich folglich gehäuseseitig ein insgesamt sehr schmaler, länglicher Randbereich ergibt, der als solcher entsprechend konturseitig integriert werden kann.

Eine weitere besonders vorteilhafte Weiterbildung der Erfindung sieht vor, dass die Stirnfläche des Gehäuses beidseits der Stirnseite des Streifens mit einer Beschichtung, insbesondere eine Metallbeschichtung oder einer Lackierung, und/oder einer Strukturierung versehen ist. Wie beschrieben ist die Stirnseite des Gehäuserandes, wo der Kunststofffolienstreifen randbündig endet, in der Montagestellung in der Regel ebenfalls sichtbar. Wird nun diese Stirnfläche entsprechend beschichtet, lackiert und/oder mit einer Strukturierung, beispielsweise einer Narbung oder dergleichen, versehen, so kann diesem Bereich eine besondere Optik verliehen werden, die auch dann sichtbar ist, wenn die Konturbeleuchtung nicht zugeschaltet ist. Beispielsweise kann hiermit eine Metalloptikeinfassung realisiert werden, die als solche sichtbar ist, und in welcher bei Bedarf zusätzlich der Lichtstreifen erzeugt werden kann.

Neben der Beleuchtungseinrichtung selbst betrifft die Erfindung ferner ein Kraftfahrzeug, umfassend wenigstens eine derartige Beleuchtungseinrichtung. Eine solche Beleuchtungseinrichtung kann wie beschrieben beispielsweise zur Konturumrahmung von Lautsprechern, Tastern, Bedienfeldern, Anzeigeflächen, Handgriffen, Armlehnen etc. verwendet werden. Selbstverständlich ist die Querschnittsgeometrie des Gehäuses insofern auf den jeweiligen Einsatzzweck abgestimmt. Das Gehäuse muss natürlich derart ausgeformt sein, dass es mit seinem wesentlichen Gehäusekörper letztlich dort integriert werden kann, wo die Konturbeleuchtung verbaut werden soll, zum anderen sind natürlich entsprechende Halte- oder Befestigungsmittel gehäuseseitig vorzusehen, die einen entsprechenden Verbau ermöglichen.

Weitere Vorteile, Merkmale und Einzelheiten der Erfindung ergeben sich aus dem im Folgenden beschriebenen Ausführungsbeispiel. Dabei zeigen:
- Fig. 1: eine Prinzipdarstellung einer erfindungsgemäßen Beleuchtungseinrichtung einer ersten Ausführungsform in Form einer Explosionsdarstellung,
- Fig. 2: die zusammengesetzte Beleuchtungseinrichtung aus Fig. 1, und
- Fig. 3: ein weiteres Ausführungsbeispiel für eine erfindungsgemäße Beleuchtungseinrichtung.

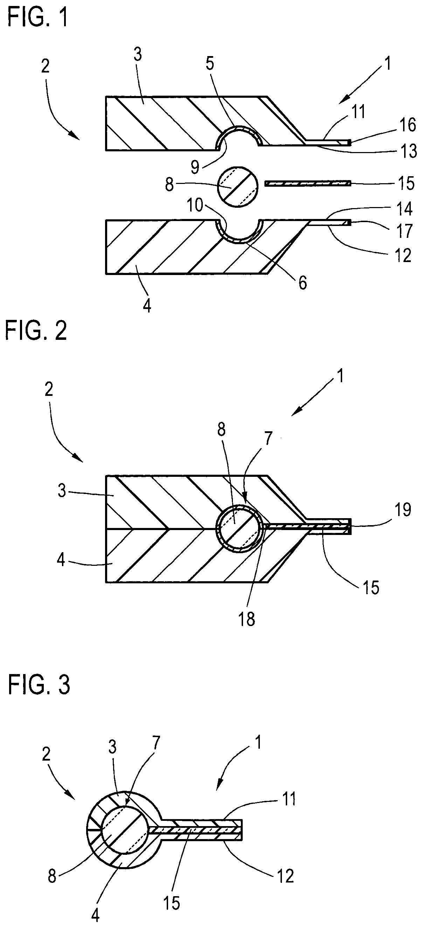

Fig. 1 zeigt eine erfindungsgemäße Beleuchtungseinrichtung 1, die als Konturbeleuchtung für ein Kraftfahrzeug dient. Sie umfasst ein Gehäuse 2, bestehend aus einem ersten Gehäuseteil 3 und einem zweiten Gehäuseteil 4. Bei den Gehäuseteilen handelt es sich vorzugsweise um Kunststoffbauteile, die im Spritzgussverfahren hergestellt werden können. Da es sich hier lediglich um eine Prinzipdarstellung handelt, anhand welcher lediglich der grundsätzliche Aufbau einer erfindungsgemäßen Beleuchtungseinrichtung erläutert werden soll, ist es selbstverständlich, dass das Gehäuse in seiner Querschnittsform, was den Gehäusekörper als solchen angeht, letztlich beliebig ausgeführt sein kann. D. h., dass es nicht zwingend und auch nicht begrenzend ist, das Gehäuse zumindest im linksseitigen Bereich rechteckig auszuführen. Selbstverständlich sind unterschiedlichste Geometrien und Konfigurationen denkbar, auch können entsprechende Halte- und Befestigungsmittel angeformt sein etc.

Jedes Gehäuseteil 2, 3 weist eine halbrunde Eintiefung 5, 6 auf, die zusammengesetzt, siehe Fig. 2, einen Aufnahmeraum 7 bilden, in dem ein Lichtleiter 8 aufgenommen wird. Der Lichtleiter 8, der beispielsweise einen Durchmesser von 5 mm besitzt, ist querschnittlich wie dargestellt ebenfalls rund, so dass eine entsprechende formkomplementäre Geometrie gegeben ist.

Jede halbrunde Eintiefung 5, 6 ist mit einer Beschichtung 9, 10 versehen, beispielsweise einer Spiegelbeschichtung.

Weiterhin gehen die beiden Gehäuseteile 3, 4 in gekröpfter Form in jeweils einen Randbereich 11, 12 über, der sehr schmal ist und letztlich linienförmig verläuft. Das gesamte Gehäuse 2 ist an sich ein längliches Bauteil, das in seiner Form letztlich der zu beleuchtenden Kontur entspricht.

Des Weiteren weist jedes Gehäuseteil 3, 4 randseitige Auflageflächen 13, 14 auf, die als Halteflächen für einen dazwischen aufzunehmenden Streifen 15 aus einer Kunststofffolie, vorzugsweise einer PMMA-Folie dienen. Zwischen diesen Auflageflächen 13, 14 wird, siehe Fig. 2, der Streifen 15 fixiert, beispielsweise geklemmt oder daran verklebt.

Weiterhin sind im gezeigten Beispiel die Stirnseiten der Randabschnitte 11, 12 mit einer Beschichtung 16, 17, beispielsweise einer Metallbeschichtung aus Aluminium oder dergleichen, versehen, so dass sich randseitig eine Metalloptik ergibt.

Fig. 2 zeigt die zusammengesetzte Beleuchtungseinrichtung 1. Die beiden Gehäuseteile 3, 4 sind zur Bildung des Gehäuses 2 zusammengesetzt und miteinander verbunden, beispielsweise durch nicht näher gezeigte Rastmittel oder dergleichen. Der Lichtleiter 8 ist in der Aufnahme 7 aufgenommen. Zu dieser Aufnahme 7 und damit zum Lichtleiter 8 hin geführt ist auch der Streifen 15, der mit seiner Stirnkante 18 unmittelbar benachbart zum Lichtleiter 8 liegt. Die zweite Stirnkante 19 schließt im Wesentlichen randbündig im Bereich der Stirnflächen der Randabschnitte 11, 12 ab. Der Streifen 15 selbst ist sehr dünn, er ist bevorzugt zwischen 0,3 - 0,5 mm dick.

Wird nun Licht an einer Stirnseite des Lichtleiters 8 eingekoppelt, so läuft es einerseits durch den Lichtleiter, andererseits wird es seitlich ausgekoppelt. Das ausgekoppelte Licht wird in die Stirnseite 18 des Streifens 15 eingekoppelt, läuft durch den Streifen 15, der für das Licht transparent ist, und wird an der anderen Stirnseite 19 zum Raum hin ausgekoppelt. D. h., dass an der Stirnseite 19 ein sehr schmaler, nur eben 0,3 - 0,5 mm breiter Lichtstreifen sichtbar ist, verbunden beispielsweise mit der verliehenen Metalloptik über die Beschichtungen 16, 17.

Die Dicke der Konfiguration aus den beiden Randstreifen 11, 12 und des Streifens 15 ist ebenfalls sehr schmal, sie sollte bevorzugt im Bereich weniger Millimeter liegen, was ohne Weiteres möglich ist, nachdem bereits die Folie dünn ist und in Folge der Kröpfung der Gehäuseteile 3, 4 auch die Randabschnitte 11, 12 sehr schmal ausgeführt werden können.

Fig. 3 zeigt lediglich exemplarisch eine weitere erfindungsgemäße Beleuchtungseinrichtung 1, die dem Grunde nach genauso aufgebaut ist wie die Beleuchtungseinrichtung 1 aus den Fig. 1 und 2. Anders ist hier lediglich exemplarisch die Geometrie des Gehäuses 2, das wiederum aus zwei Gehäuseteilen 3, 4 besteht, die hier jedoch einen im Wesentlichen runden Querschnitt besitzen. Vorgesehen ist wiederum ein Aufnahmeraum 7 für einen Lichtleiter 8, wie auch die beiden Randabschnitte 11, 12 entsprechende Auflageflächen aufweisen, zwischen denen wiederum ein für ausgekoppeltes Licht des Lichtleiters transparenter Kunststofffolienstreifen 15, vorzugsweise aus PMMA, aufgenommen ist. Die Dimensionierung der Randabschnitte 11, 12 kann beispielsweise derart sein, dass sich ein Verhältnis von Gesamtbreite (also beide Randabschnitte 11, 12 inklusive Folienstreifendicke) zur Breite von 1:4 oder 1:3 ergibt.

Wenngleich nicht näher dargestellt, kann auch hier der Aufnahmeraum 7 randseitig mit einer Spiegelfläche oder einer Lackierung belegt sein, wie auch die Stirnseiten der Randabschnitte 11, 12 mit einer entsprechenden Beschichtung oder Strukturierung oder dergleichen versehen sein kann.

Die Folie ist wie beschrieben aus einem für emittiertes Licht transparenten Kunststoff wie beispielsweise PMMA. Um nicht nur bei Verwendung weißes Licht abgebenden Lichtquelle eine weiße Lichtlinie emittierten zu können, sondern auch einen farbigen Lichtstreifen zu erzeugen, ist es denkbar, einen eingefärbten Kunststofffolienstreifen 15 zu verwenden.

## Patentansprüche

1. Beleuchtungseinrichtung, insbesondere Konturbeleuchtung für ein Kraftfahrzeug, mit einem Gehäuse (2) umfassend ein erstes und ein zweites Gehäuseteil (3, 4), die zwischen sich in einem Aufnahmeraum (7) einen Lichtleiter (8) aufnehmen, wobei beide Gehäuseteile (3, 4) in einem Randabschnitt (11, 12) gekröpft ausgebildet sind, so dass sie in einen schmalen Randstreifen übergehen, wobei zwischen den Randabschnitten (11, 12) ein Streifen (15) aus einer für von dem Lichtleiter (8) emittiertes Licht transparenten Kunststofffolie angeordnet ist, wobei das emittierte Licht an einer Stirnseite (18) des Streifens (15) eingekoppelt und an der anderen Stirnseite (19) ausgekoppelt wird wobei die andere Stirnseite (19) randbündig mit einer Stirnfläche der Randabschnitte (11, 12) abschließt.

2. Beleuchtungseinrichtung nach Anspruch 1,
**dadurch gekennzeichnet,**
**dass** der Folienstreifen (15) eine Dicke kleiner 1 mm, insbesondere zwischen 0,3 - 0,5 mm aufweist.

3. Beleuchtungseinrichtung nach Anspruch 1 oder 2,
**dadurch gekennzeichnet,**
**dass** der Folienstreifen (15) aus PMMA ist.

4. Beleuchtungseinrichtung nach einem der vorangehenden Ansprüche,
**dadurch gekennzeichnet,**
**dass** der Folienstreifen (15) eingefärbt ist.

5. Beleuchtungseinrichtung nach einem der vorangehenden Ansprüche,
**dadurch gekennzeichnet,**
**dass** das beide Gehäuseteile (3, 4) randseitig Auflageflächen (13, 14) aufweisen, zwischen denen der Folienstreifen (15) aufgenommen ist.

6. Beleuchtungseinrichtung nach Anspruch 5,
**dadurch gekennzeichnet,**
**dass** sich an die Auflageflächen (13, 14) der Aufnahmeraum (7) anschließt, in dem der Lichtleiter aufgenommen ist.

7. Beleuchtungseinrichtung nach einem der vorangehenden Ansprüche,
**dadurch gekennzeichnet,**
**dass** der Folienstreifen (15) zwischen den Rändern, insbesondere zwischen den Auflageflächen (13, 14) eingeklemmt oder verklebt ist.

8. Beleuchtungseinrichtung nach einem der vorangehenden Ansprüche,
**dadurch gekennzeichnet,**
**dass** der Aufnahmeraum (7) querschnittlich rund ist, wobei eine halbrunde Eintiefung (5) im ersten Gehäuseteil (3) und eine zweite halbrunde Eintiefung (6) im zweiten Gehäuseteil (4) vorgesehen sind, die sich in der Montagestellung zum Aufnahmeraum (7) ergänzen.

9. Beleuchtungseinrichtung nach einem der vorangehenden Ansprüche,
**dadurch gekennzeichnet,**
**dass** der Aufnahmeraum (7) zumindest abschnittsweise lackiert oder zur Bildung einer Spiegelfläche, insbesondere mit Aluminium, bedampft ist.

10. Beleuchtungseinrichtung nach einem der vorangehenden Ansprüche,
**dadurch gekennzeichnet,**
**dass** die Stirnfläche des Gehäuses (2) beidseits der Stirnseite (19) des Folienstreifens (15) mit einer Beschichtung (16, 17), insbesondere einer Metallbeschichtung oder Lackierung, und/oder einer Strukturierung versehen ist.

11. Kraftfahrzeug, umfassend wenigstens eine Beleuchtungseinrichtung (1) nach einem der vorangehenden Ansprüche.

## Claims

1. Lighting device, in particular contour lighting for a motor vehicle, with a housing (2) comprising a first and a second housing part (3, 4) which receive a light conductor (8) between them in a receiving space (7), wherein both housing parts (3, 4) are designed to be bent at an angle in an edge section (11, 12) so that they transition into a narrow edge strip, wherein between the edge sections (11, 12) a strip (15) of plastic film is arranged which is transparent to light emitted by the light conductor (8), wherein the emitted light is projected onto one end face (18) of the strip (15) and extracted from the other end face (19), wherein the other end face (19) is designed to terminate flush with an end face of the edge sections (11, 12).

2. Lighting device according to claim 1,
**characterised in that**
the film strip (15) has a thickness of less than 1 mm, in particular between 0.3 and 0.5 mm.

3. Lighting device according to claim 1 or 2,
**characterised in that**
the film strip (15) is made of PMMA.

4. Lighting device according to any of the preceding claims,
**characterised in that**
the film strip (15) is coloured.

5. Lighting device according to any of the preceding claims,
**characterised in that**
both housing parts (3, 4) have support surfaces (13, 14) at the edge, between which the film strip (15) is mounted.

6. Lighting device according to claim 5,
**characterised in that**
the receiving space (7), in which the light conductor is mounted, adjoins the support surfaces (13, 14).

7. Lighting device according to any of the preceding claims,
**characterised in that**
the film strip (15) is clamped or bonded between the edges, in particular between the support surfaces (13, 14).

8. Lighting device according to any of the preceding claims,
**characterised in that**
the receiving space (7) has a round cross section, wherein a semi-circular depression (5) is formed in the first housing part (3) and a second semi-circular depression (6) is formed in the second housing part (4), which complement one another in the assembled position to form the receiving space (7).

9. Lighting device according to any of the preceding claims,
**characterised in that**
the receiving space (7) is at least partly painted or coated by vapour-depositing to form a mirror surface, in particular with aluminium.

10. Lighting device according to any of the preceding claims,
**characterised in that**
the end face of the housing (2) is provided on both side of the end side (19) of the film strip (15) with a coating (16, 17), in particular a metal coating or varnish, and or a structural finish.

11. Motor vehicle, comprising at least one lighting device (1) according to any of the preceding claims.

## Revendications

1. Dispositif d'éclairage, en particulier éclairage de contour pour un véhicule automobile, avec un logement (2) comprenant une première et une deuxième partie de logement (3, 4), qui logent entre elles une fibre optique (8) dans un espace récepteur (7),
dans lequel les deux parties de logement (3, 4) sont réalisées coudées dans un tronçon de bord (11, 12) de telle sorte qu'elles se transforment en une bande de bord étroite,
dans lequel une bande (15) en un film plastique transparent pour de la lumière émise par la fibre optique (8) est agencée entre les tronçons de bord (11, 12),
dans lequel la lumière émise est introduite au niveau d'un côté frontal (18) de la bande (15) et est sortie au niveau de l'autre côté frontal (19),
dans lequel l'autre côté frontal (19) se termine en affleurant le bord d'une surface frontale des tronçons de bord (11, 12).

2. Dispositif d'éclairage selon la revendication 1, **caractérisé en ce que** la bande de film (15) présente une épaisseur inférieure à 1 mm, en particulier entre 0,3 et 0,5 mm.

3. Dispositif d'éclairage selon la revendication 1 ou 2, **caractérisé en ce que** la bande de film (15) est en PMMA.

4. Dispositif d'éclairage selon l'une quelconque des revendications précédentes, **caractérisé en ce que** la bande de film (15) est colorée.

5. Dispositif d'éclairage selon l'une quelconque des revendications précédentes, **caractérisé en ce que** les deux parties de logement (3, 4) présentent au bord des surfaces d'appui (13, 14) entre lesquelles la bande de film (15) est logée.

6. Dispositif d'éclairage selon la revendication 5, **caractérisé en ce que** l'espace récepteur (7) dans lequel la fibre optique est logée se rattache aux surfaces d'appui (13, 14).

7. Dispositif d'éclairage selon l'une quelconque des revendications précédentes, **caractérisé en ce que** la bande de film (15) est coincée ou collée entre les bords, en particulier entre les surfaces d'appui (13, 14).

8. Dispositif d'éclairage selon l'une quelconque des revendications précédentes, **caractérisé en ce que** l'espace récepteur (7) a une section transversale ronde, une cavité demi-ronde (5) étant prévue dans la première partie de logement (3) et une deuxième cavité demi-ronde (6) étant prévue dans la deuxième partie de logement (4), lesquelles cavités se complètent dans la position de montage pour former l'espace récepteur (7).

9. Dispositif d'éclairage selon l'une quelconque des revendications précédentes, **caractérisé en ce que** l'espace récepteur (7) est au moins en partie verni ou métallisé, en particulier à l'aluminium, pour former une surface réfléchissante.

10. Dispositif d'éclairage selon l'une quelconque des revendications précédentes, **caractérisé en ce que** la surface frontale du logement (2) est munie, des deux côtés du côté frontal (19) de la bande de film (15), d'un revêtement (16, 17), en particulier d'un revêtement métallique ou d'un vernis, et/ou d'une structure.

11. Véhicule automobile, comprenant au moins un dispositif d'éclairage (1) selon l'une quelconque des revendications précédentes.
